Europäisches Patentamt

European Patent Office

Office européen des brevets

(11) Publication number: **0 513 883 A1**

# EUROPEAN PATENT APPLICATION

(21) Application number: **92200956.8**

(22) Date of filing: **03.04.92**

(51) Int. Cl.⁵: **C09D 5/10**

(30) Priority: **12.04.91 EP 91200866**

(43) Date of publication of application:
**19.11.92 Bulletin 92/47**

(84) Designated Contracting States:
**AT BE CH DE DK ES FR GB GR IT LI NL PT SE**

(71) Applicant: **AKZO N.V.**
**Velperweg 76**
**NL-6824 BM Arnhem(NL)**

(72) Inventor: **Moos, Jan Wilhelm Ernst**
**Broekerhavenweg 185**
**NL-1611 CD Bovenkarspel(NL)**
Inventor: **de Vries, Marinus Johannes**
**Anrijperdiep 12**
**NL-8032 NP Zwolle(NL)**
Inventor: **van Ommen, Albert**
**Revelingseweg 58**
**NL-8191 KS Wapenveld(NL)**

(74) Representative: **Schalkwijk, Pieter Cornelis**
**Akzo N.V. Patent Department P.O. Box 9300**
**NL-6800 SB Arnhem(NL)**

(54) **Two-pack waterborne zinc-rich anticorrosion primer.**

(57) A two-pack waterborne zinc-rich anticorrosion primer is provided which is based upon the combination of a first pack comprising at least metallic zinc dust with a second pack comprising at least a stable aqueous dispersion of a particular chlorinated addition copolymer. These primers can be formulated without the need for significant amounts of organic co-solvents, and are readily curable at ambient temperatures upon mixing of the two packs. This allows overcoating shortly after drying, with the resulting films possessing desirable hardness, resiliancy and adhesion both to the substrate and topcoat.

EP 0 513 883 A1

Background of the Invention

The present invention relates generally to zinc-rich coating compositions particularly suitable for use as anticorrosion primers for metal substrates, and especially steel substrates.

Powdered zinc (metallic zinc dust) has long been used as a metallic pigment in steel primers by virtue of its position in the electrolytic potential scale and general commercial availability.

Zinc-rich primers are, in general, well-known in the art, having been commercially available at least since the 1940s. These zinc-rich primers have normally been formulated as organic solvent-based systems with relatively large amounts of zinc in relation to binder. Dried films from these zinc-rich primers generally comprise a zinc content of up to about 95 wt%. Both organic (e.g., epoxy and/or acrylic) and inorganic (e.g., silicate) binders have been utilized.

The organic solvent-based zinc-rich primers, while able to provide good corrosion resistance under ideal conditions, suffer from a number of defects. For example, they are relatively slow drying and the resulting film can be soft, which significantly increases the chances for damage during subsequent handling and/or transportation. Further, these organic solvent-based coatings emit considerable amounts of volatile organic solvents.

Aqueous versions of zinc-rich anitcorrosion primers are also known. See, for example, US3231537, US3884863, US3998771, EP-A-0260961 and EP-A-0291260. These systems are generally based upon aqueous dispersions (emulsions) of organic polymers, anticorrosive pigments (which may include metallic zinc dust) and, optionally, other normal additives. These aqueous versions, however, still suffer many of the slow drying and soft coating problems of their organic solvent-based counterparts and, in some cases, may still require significant amounts of co-colvents.

It has now been found that waterborne zinc-rich primers of the type generally described above can be formulated as two-pack systems without the need for significant amounts of organic co-solvents, which primers readily cure at ambient temperatures upon mixing of the two packs, allow overcoating shortly after drying, and result in films of desirable hardness, resiliancy and adhesion both to the substrate and topcoat.

Summary of the Invention

In accordance with the present invention, there is provided a waterborne zinc-rich anticorrosion primer based upon an aqueous dispersion of an organic polymer, an anticorrosive pigment including metallic zinc dust and, optionally, other normal extenders and additives, characterized in that the primer comprises:

(A) 40-95 wt%    anticorrosive pigment(s) comprising (1) 60-100 parts by weight metallic zinc dust and (2) 0-40 parts by weight non-conductive and/or other conductive anticorrosive pigments (100 parts by weight total);

(B) 0-40 wt%    of extenders;

(C) 3-15 wt%    of a binder component comprising a stable aqueous dispersion of a chlorinated addition copolymer comprising the emulsion polymerization product, in the presence of anionic or anionic/nonionic surface active agents, of addition polymerizable monomers comprising (i) alkyl (meth)acrylates, (ii) vinyl chloride and (iii) vinylidene chloride, wherein the stable aqueous dispersion may be neutralized with from 0-125 equivalent % of a base, wherein the stable aqueous disperison comprises a pH before neutralization of less than about 2, and wherein the primer comprises at least 3 wt% of the stable aqueous dispersion of the chlorinated addition copolymer; and

(D) 0-5 wt%    of additives,

wherein (a) wt% is based upon component solids/total solids content ("solids/solids"), (b) (A) + (B) + (C) + (D) comprises 100 wt% total solids, and (c) the primer is formulated as a two-pack (two-component) system with a first pack comprising at least the metallic zinc dust and a second pack comprising at least the stable aqueous dispersion of the chlorinated addition copolymer.

Within the above-stated ranges, anticorrosion primers can formulated which possess a desirable combination of drying time, resulting film hardness and resiliance, and adhesion to both the substrate and subsequent top coats. Particularly advantageous is that, when the two packs are mixed, these primers can be rapidly cured under ambient temperature conditions to produce such advantageous films, with the resulting films on the so-primed substrate less likely to be damaged through rough handling, transportation or overcoating. A consequence of this is improved corrosion resistance due to the ability of the primer layer to better retain its integrity.

These and other features and advantages of the present invention will be more readily understood by those skilled in the art from a reading of the following detailed description.

Detailed Description of the Preferred Embodiments

As indicated above, the two-pack waterborne zinc-rich anticorrosion primers in accordance with the present invention comprise, in their overall concept:

(A) 40-95 wt%   anticorrosive pigment(s) comprising (1) 60-100 parts by weight metallic zinc dust and (2) 0-40 parts by weight non-conductive and/or other conductive anticorrosive pigments (100 parts by weight total);

(B) 0-40 wt%   of extenders;

(C) 3-15 wt%   of a binder component comprising a stable aqueous dispersion of a chlorinated addition copolymer comprising the emulsion polymerization product, in the presence of anionic or anionic/nonionic surface active agents, of addition polymerizable monomers comprising (i) alkyl (meth)acrylates, (ii) vinyl chloride and (iii) vinylidene chloride, wherein the stable aqueous dispersion may be neutralized with from 0-125 equivalent % of a base, wherein the stable aqueous disperison comprises a pH before neutralization of less than about 2, and wherein the primer comprises at least 3 wt% of the stable aqueous dispersion of the chlorinated addition copolymer; and

(D) 0-5 wt%   of additives,

wherein (a) wt% is based upon component solids/total solids content ("solids/solids"), (b) (A) + (B) + (C) + (D) comprises 100 wt% total solids, and (c) the primer is formulated as a two-pack (two-component) system with a first pack comprising at least the metallic zinc dust and a second pack comprising at least the stable aqueous dispersion of the chlorinated addition copolymer.

Metallic zinc dust is, in general, well-known in the art. Preferred for use in the present invention is zinc dust having a particle size range of >95% between 2-4 $\mu$m in diameter and averaging about 2,8 $\mu$m.

Component (A) (the anticorrosive pigment) should comprise 60-100 parts by weight, and more preferably 75-100 parts by weight, of the metallic zinc dust per 100 total parts by weight. The remainder of the anticorrosive pigments (0-40 parts by weight and preferably 0-25 parts by weight) may comprise one or more non-conductive and/or conductive anticorrosive pigments.

Non-conductive and conductive anticorrosive pigments are, in general, well-known to those skilled in the art. As suitable non-conductive anticorrosive pigments may be mentioned, for example, ion exchanged silicas, zinc phosphates, zinc oxides and aluminium phosphates. As suitable conductive anticorrosive pigments may be mentioned, for example, iron phosphides, iron oxides and aluminum flakes.

A portion of these anticorrosive pigments may be replaced with various well-known extenders such as, for example, talc, mica and silicates. These extenders, as is well-known in the art, are commonly utilized to alter the application properties of the coating and barrier properties of the resulting film, as well as a cost saving measure.

The final required ingredient of the waterborne zinc-rich anticorrosive primers in accordance with the present invention is 3-15 wt% (solids/solids) of a binder component which comprises a stable aqueous dispersion of a chlorinated addition copolymer, which in turn comprises the emulsion polymerization product, in the presence of anionic or anionic/nonionic surface active agents, of addition polymerizable monomers comprising (i) an alkyl (meth)acrylate, (ii) vinyl chloride and (iii) vinylidene chloride. Such stable aqueous dispersions are well-known to those skilled in art as exemplified by the disclosures of US4341679 and EP-A-0030080, which are incorporated by reference herein for all purposes. Such aqueous dispersions are also generally commercially available, for example, from ICI Resins under the trade designation Haloflex.

As described above, the primers must comprise at least 3 wt% (solids/solids) of the stable aqueous dispersion of the chlorinated addition copolymer. The remainder of the binder component may comprise one or more other compatible anionically and/or anionically/nonionically stabilized aqueous resin dispersions, such as any one of a number of well-known acrylic latices. These "co-binders" are utilized, for example, to modify the application properties of the coating and properties of the resulting films. As a specific example may be mentioned an acrylic latex commercially available from Rohm&Haas under the trade designation Primal 330S.

It is believed that the primers of the present invention cure in part via normal air drying and in part via a chelation reaction between a salt of the zinc (chloride salt) and the acrylic ester groups of the binder component. Not only does this chelation reaction significantly decrease drying time, but it also imparts a "crosslinked" nature to the film resulting in improvements in hardness and resiliancy.

The chelation reaction rate seems to be significantly dependent on the amount of formed zinc chloride present in the reaction mixture. The zinc chloride is believed to be present via the interaction of the metallic zinc dust with (i) the chloride groups of the chlorinated addition copolymer and/or (ii) the chloride which is eliminated from the chlorinated addition copolymer.

In order to provide a sufficient chloride content to facilitate the formation of sufficient zinc chloride, it has been found that the aqueous dispersion should have a pH of less than about 2 prior to neutralization. Commercially available examples of such are those available from ICI Resins under the trade designations Haloflex 202, 202S, 208 and 281.

The primers in accordance with the present invention may also comprise up to 5wt% (solids/solids) of a vareity of other additives common to the paint industry such as rheological agents, pigment dispersing agents, surfactants, defoamers, biocides and minor amounts (less than 5 wt% based upon the total primer weight) of an organic cosolvent which is preferably water-miscible.

Because of the interaction between the zinc and the chloride, the above primers are formulated as two-pack (two-component) coatings, with the first pack comprising at least the metallic zinc dust and the second pack comprising at least the stable aqueous dispersion of the chlorinated addition copolymer.

The metallic zinc dust may be utilized as such or may, for example, be utilized in the form of an aqueous paste in order to promote ease of mixing.

Upon mixing of the two-packs via conventional methods, these primers are suitable for application onto a wide variety of metallic substrates, and are especially suited for application onto steel substrates including hot-dip galvanized and hand-derusted steel. Suitable application methods include rolling, spraying, brushing, sprinkling and dipping.

The so-mixed and so-applied primers may be dried under a wide variety of conditions. An advantageous aspect of the present systems, however, is that they can be reasonably quickly dried under ambient conditions to result in films possessing a desiable combination of hardness and resiliancy. The so-produced films also display good adhesion to both the substrate as well as a wide variety of coating compositions commonly applied over such primed steel substrates.

The primers in accordance with the present invention are not only suitable for coating fresh surfaces, but also may be advantageously utilized as maintenance coatings applied over coated and uncoated weathered substrates, such as chlorinated rubber and/or epoxy coated steel plate. In application as such a maintenance coating, these primers retain their desirable properties including adhesion to both substrate (included coated substrates) as well as overcoats.

The foregoing discussion of the present invention will be further illustrated by the following specific examples.

EXAMPLES

Preparation of Primers A-D

Primers were formulated by mixing the components listed below in Table 1 under ambient conditons by means of a dissolver and according to the procedure set forth further below. In Table 1, all amounts are expressed as grams. Primers A-C are in accordance with the present invention (including as binder a stable aqueous dispersion of a chlorinated addition polymer), while Primer D is outside the present scope.

| Component | Primer | | | |
|---|---|---|---|---|
| | A | B | C | D |
| 01 tap water | 250,00 | 250,00 | 250,00 | 250,00 |
| 02 surfactant | 2,64 | 2,64 | 2,64 | 2,64 |
| 03 thickener | 10,73 | 10,73 | 10,73 | 10,73 |
| 04 pigment dispersant | 66,00 | 66,00 | 66,00 | 66,00 |
| 05 coalescing agent | 42,90 | 42,90 | 42,90 | 42,90 |
| 06 extender | 528,00 | 528,00 | 528,00 | 528,00 |
| 07 aqueous dispersion (i) | 371,25 | --- | --- | --- |
| 07 aqueous dispersion (ii) | --- | 371,25 | --- | --- |
| 07 aqueous dispersion (iii) | --- | --- | 423,00 | --- |
| 07 aqueous dispersion (iv) | --- | --- | --- | 460,00 |
| 08 tap water | 120,00 | 120,00 | 68,25 | 31,25 |
| 09 zinc dust | 1549,50 | 1549,50 | 1549,50 | 1549,50 |
| 10 tap water | 97,20 | 97,20 | 97,20 | 97,20 |

The surfactant was a non-ionic alkyl-aryl polyether alcohol type commercially available from Rohm&Haas under the trade designation Triton X-405.

The thickener was a polyacrylate type commercially available from Rohm&Haas under the trade designation Primal RM5.

The pigment dispersant was a pigment dispersant commercially available from Rohm&Haas under the trade designation Orotan 850.

The coalescing agent was of the diolester type commercially available from Eastman Chemical under the trade designation Texanol.

The extender was a silicate pigment commercially available from Naints Mineralwerke under the trade designation Plastorit 0000.

Aqueous dispersions (i) and (ii) were anionically stabilized chlorinated vinyl latices commercially available from ICI Resins under the trade designations (i) Haloflex 208 and (ii) Haloflex 281.

Aqueous dispersion (iii) was an anionically/non-ionically stabilized chlorinated vinyl acrylic latice commercially available from ICI Resins under the trade designation Haloflex 202S.

Aqueous dispersion (iv) was an anionically/nonionically stabilized acrylic latice commercially available from Rohm&Haas under the trade designation Primal 330S.

The metallic zinc dust had an average particle size of $2,8\pm0,5\ \mu$m commercially available from Zincoli under the trade designation Zincoli Superfein 620.

Components 01 and 02 wre first mixed until a homogeneous mixture was obtained, after which component 03 was added under stirring. When this mixture was homogeneous, components 04, 05 and 06 were added and the resulting premix was ground (dispersing process by means of a dissolver) until the temperature reached a maximum of 50°C (about 5 minutes at full speed). After grinding, the maximum particle size was about 35$\mu$m. Components 7 and 8 were then added under slow stirring, which continued until a homogenous mixture was obtained.

Preparation of the primer was completed by adding component 9 under stirring until a homogenous mixture was obtained, after which component 10 was added under stirring in order to improve spraying characteristics.

Examples 1-3 and Comparative Example 1

The above-described primers A-D were applied to grit-blasted steel panels by airless spraying and allowed to dry for 24 hours under ambient temperature conditions. The dry film thickness of the coated panels was about 90$\mu$m.

These panels were then tested for the following characteristics, with the results presented below in Table II:

Resistance to rusting - in accordance with the salt spray test (600 hours) of ASTM D610, with the results expressed in units of 0-10 (10 - no rusting; 0 - failure); and

Resistance to blistering - in accordance with the salt spray test (600 hours) of ASTM D714, with the results expressed in units of 2-10 (10 - no blistering; blistering standard no. 6, 4 and 2 representing progressively larger sizes). The frequency of observed blistering is expressed in units of D (dense), MD (medium dense), M (medium) and F (few).

TABLE II

| Example | Primer | Rust | | Blistering on Surface |
|---------|--------|---------|--------|-----------------------|
| | | Surface | Scribe | |
| 1 | A | 10 | 7 | 10 |
| 2 | B | 10 | 4 | 10 |
| 3 | C | 10 | 4 | 10 |
| C1 | D | 6 | 0 | 6M |

Examples 4-6 and Comparative Example 2

The above-described primers were applied to grit-blasted steel panels by airless spraying and allowed to dry for three hours under ambient temperature conditions. The dry film thickness of the coated panels

was about 90μm.

Onto these so-primed panels was applied by airless spraying a high solids epoxy topcoat (commercially available from Akzo Coatings under the trade designation Redox EP 3302) to a dry film thickness of about 100μm (total dry film thickness of about 190μm). The epoxy topcoat was allowed to cure for 7 days under ambient conditions.

These panels were then tested for the following characteristics, with the results presented below in Table III:

Intercoat adhesion - in accordance with ASTM D3359, with the results expressed in units of 0B-5B, with 5B indicating good adhesion and 0B indicating failure.

TABLE III

| Example | Primer | Intercoat Adhesion |
|---------|--------|--------------------|
| 4 | A | 5B |
| 5 | B | 5B |
| 6 | C | 4B |
| C2 | D | 1B |

Only a limited number of preferred embodiments of the present invention have been described above. One skilled in the art, however, will recognize numerous substitutions, modifications and alterations which can be made without departing from the spirit and scope of the invention as limited by the following claims.

## Claims

1. A waterborne zinc-rich anticorrosion primer based upon an aqueous dispersion of an organic polymer, anticorrosive pigments including metallic zinc dust and, optionally, other normal extenders and additives, characterized in that the primer comprises:

(A) 40-95 wt% anticorrosive pigment(s) comprising (1) 60-100 parts by weight metallic zinc dust and (2) 0-40 parts by weight non-conductive and/or other conductive anticorrosive pigments (100 parts by weight total);

(B) 0-40 wt% of extenders;

(C) 3-15 wt% of a binder component comprising a stable aqueous dispersion of a chlorinated addition copolymer comprising the emulsion polymerization product, in the presence of anionic or anionic/nonionic surface active agents, of addition polymerizable monomers comprising (i) alkyl (meth)acrylates, (ii) vinyl chloride and (iii) vinylidene chloride, wherein the stable aqueous dispersion may be neutralized with from 0-125 equivalent % of a base, wherein the stable aqueous disperison comprises a pH before neutralization of less than about 2, and wherein the primer comprises at least 3 wt% of the stable aqueous dispersion of the chlorinated addition copolymer; and

(D) 0-5 wt% of additives,

wherein (a) wt% is based upon component solids/total solids content, (b) (A)+(B)+(C)+(D) comprises 100 wt% total solids, and (c) the primer is formulated as a two-pack system with a first pack comprising at least the metallic zinc dust and a second pack comprising at least the stable aqueous dispersion of the chlorinated addition copolymer.

2. The waterborne zinc-rich anticorrosion primer of claim 1, characterized in that (C) comprises an anionically stabilized aqueous dispersion of a chlorinated copolymer.

3. The waterborne zinc-rich anticorrosion primer of claim 1, characterized in that (C) comprises an anionically/nonionically stabilized aqueous dispersion of a chlorinated copolymer.

4. The waterborne zinc-rich anticorrosion primer of claim 1, characterized in that (C) further comprises an anionically or anionically/non-ionically stabilized aqueous resin dispersion which is compatible with the stable aqueous dispersion of the chlorinated addition copolymer.

5. The waterborne zinc-rich anticorrosion primer of claim 1, charaterized in that the aqueous dispersion is neutralized with up to 125 equivalent % of a base.

6. The waterborne zinc rich primer of claim 1, characterized in that (A) comprises (1) 75-100 parts by weight metallic zinc dust and (2) 0-25 parts by weight non-conductive and/or other conductive anticorrosive pigments.

7. The waterborne zinc-rich primer of claim 1, characterized in that the metallic zinc dust has a particle size range of >95% between 2-4 $\mu$m in diameter.

8. The waterborne zinc-rich primer of claim 1, characterized in that the first pack comprises the metallic zinc dust in the form of an aqueous paste.

9. A method of priming a substrate by mixing the first and second packs of the primer of any one of claims 1-8, applying the primer to the substrate then curing under ambient conditions.

10. A method of maintenace coating a substrate by mixing the first and second packs of the primer of any one of claims 1-8, applying the primer to the substrate then curing under ambient conditions.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | US-A-3 231 537 (JOHN R. FISHER,JR.)<br>* column 3, line 65 - line 75; claim 1 *<br>--- | 1,6,9,10 | C09D5/10 |
| Y,D | EP-A-0 260 961 (B.P.)<br>* page 3, line 5 - line 10 *<br>* claims 1,2,5,12; example 2 *<br>--- | 1,6,9,10 | |
| A | EP-A-0 030 080 (ICI)<br>* claims; example 7 *<br><br>----- | 1,5 | |
| | | | **TECHNICAL FIELDS SEARCHED (Int. Cl.5 )** |
| | | | C09D |

The present search report has been drawn up for all claims

| Place of search | Date of completion of the search | Examiner |
|---|---|---|
| THE HAGUE | 01 SEPTEMBER 1992 | GIRARD Y.A. |